# EUROPÄISCHE PATENTSCHRIFT

(11) **EP 2 354 566 B1**
(45) Veröffentlichungstag und Bekanntmachung des Hinweises auf die Patenterteilung: **19.06.2019**
(21) Anmeldenummer: 11000171.6
(22) Anmeldetag: 12.01.2011
(51) Int. Cl.: B29C 65/48, B29C 65/54, B29C 65/78, B29C 65/00, C09J 5/00, F16B 11/00

(54) **Verfahren zur Herstellung einer Klebeverbindung sowie Anordnung zur Durchführung des Verfahrens**
Method for manufacturing an adhesive joint, and device for executing the method
Procédé de fabrication d'une liaison adhésive ainsi qu'agencement destiné à l'exécution du procédé

(30) Priorität: 29.01.2010 DE 102010006328
(43) Veröffentlichungstag der Anmeldung: 10.08.2011
(73) Patentinhaber: Premium AEROTEC GmbH, 86179 Augsburg (DE)
(72) Erfinder: Scholler, Jochen, 86845 Großaitingen (DE)
(74) Vertreter: Isarpatent

(56) Entgegenhaltungen:
- EP-A2- 1 484 164
- DE-T2- 60 309 054
- US-A1- 2002 185 207

## Beschreibung

### TECHNISCHES GEBIET

Die vorliegende Erfindung betrifft ein Verfahren zur Herstellung einer Klebeverbindung zwischen einem ersten Körper und einem zweiten Körper. Des Weiteren betrifft die Erfindung eine Anordnung zur Durchführung des erfindungsgemäßen Verfahrens.

Herkömmlicherweise wird bei der Herstellung einer Klebeverbindung zwischen einem ersten Körper und einem zweiten Körper zunächst der Klebstoff auf einen Körper aufgetragen und anschließend werden die Körper zusammengepresst. Bei dieser Vorgehensweise wird entweder zuviel Klebstoff aufgetragen, der dann nach dem Zusammenfügen der beiden Körper aus dem zwischen den beiden Körpern gebildeten Klebespalt austritt, oder es wird zuwenig Klebstoff aufgetragen, sodass nicht gewährleistet ist, dass Klebstoff die miteinander zu verklebenden Flächen vollständig benetzt und somit den Klebespalt vollständig ausfüllt.

Soll somit sichergestellt werden, dass alle Bereich der miteinander zu klebenden Flächen mit Klebstoff benetzt werden, so ist die erste Variante vorzuziehen, die jedoch dazu führt, dass der austretende überschüssige Klebstoff aufwändig entfernt werden muss und die von dem überschüssigen Klebstoff benetzten Flächen der beiden Körper anschließend aufwändig gereinigt werden müssen. Zudem wird bei dieser Vorgehensweise stets mehr Klebstoff benötigt, als für die eigentliche Klebung erforderlich ist.

Die EP 1 484 164 A2 beschreibt ein Verfahren zum Verkleben von Bauteilen mit dem Anordnen eines ersten und eines zweiten Fügeteils aus Faserverbundmaterial auf einer Auflage, wobei an den Auflageflächen zwischen den Fügeteilen eine Zwischenschicht aus einem Faserverbund-Halbzeug angeordnet wird.

### DARSTELLUNG DER ERFINDUNG

Aufgabe der vorliegenden Erfindung ist es daher, ein gattungsgemäßes Verfahren zur Herstellung einer Klebeverbindung zwischen zwei Körpern anzugeben, bei welchem einerseits eine ausreichende Klebstoffmenge für die vollständige Klebung zur Verfügung gestellt wird, andererseits aber vermieden wird, dass durch aus der Klebeverbindung austretenden überschüssigen Klebstoff verursachte Verschmutzungen auf nicht am Klebeprozess beteiligten Flächen beseitigt werden müssen.

Diese Aufgabe wird durch das im Patentanspruch 1 angegebene Verfahren gelöst.

Erfindungsgemäß werden dabei die folgenden Schritte durchgeführt:
a) Positionieren der beiden Körper derart, dass zwischen den Körpern ein Klebespalt gebildet wird;
b) Bereitstellen von zumindest einer Zuführeinrichtung für ein Klebstofffluid derart, dass zumindest eine Austrittsöffnung der Zuführeinrichtung in den Klebespalt mündet;
c) Anbringen einer gasdurchlässigen Abdeckung im Bereich der jeweiligen der verbleibenden Öffnungen des Klebespalts derart, dass die Öffnungen von der jeweils zugeordneten gasdurchlässigen Abdeckung bedeckt sind;
d) Anbringen einer mit einem Unterdruckanschluss versehenen gasdichten Umhüllung zumindest im Bereich der jeweiligen gasdurchlässigen Abdeckung, derart, dass sich die mit der jeweiligen gasdurchlässigen Abdeckung versehenen Öffnungen des Klebespalts im Inneren der gasdichten Umhüllung befinden; und
e) Zuführen eines Klebstofffluids durch die Zuführeinrichtung in den Klebstoffspalt und Anlegen eines Unterdrucks an den Unterdruckanschluss der gasdichten Umhüllung.

### VORTEILE

Das Zuführen des fluidartigen Klebstoffs unmittelbar in den nach dem Positionieren der beiden Körper entstandenen Klebespalt mittels der an den freien Öffnungen des Klebespalts angreifenden Saugkraft des angelegten Unterdrucks führt dazu, dass der fluidartige Klebstoff im Klebespalt entlang fließt und alle miteinander zu verklebenden Oberflächen der beiden Körper benetzt. Ein Austreten des Klebstofffluids aus dem Klebespalt wird durch die gasdurchlässige Abdeckung des Klebespalts verhindert. Auf diese Weise kann die im Klebespalt enthaltene Luft durch die gasdurchlässige Abdeckung entweichen, aber der Klebstoff wird von der gasdurchlässigen Abdeckung zurückgehalten und kann somit nicht aus dem Klebespalt austreten. Der an der Außenseite der gasdurchlässigen Abdeckung anliegende Unterdruck sorgt dafür, dass sämtliche Luft aus dem Klebespalt abgesaugt wird und dass in die ursprünglich mit Luft gefüllten Hohlräume des Klebespalts Klebstoff einfließt. Dadurch wird eine vollständige Befüllung des Klebespalts mit Klebstoff erreicht. Auch Luftblasen im Klebespalt werden auf diese Weise zuverlässig verhindert.

Die Herstellung der Klebeverbindung wird somit wesentlich vereinfacht und kann sogar teilautomatisiert durchgeführt werden. Auch der Reinigungsaufwand nach Durchführung der Klebung mit dem erfindungsgemäßen Verfahren ist gegenüber den herkömmlichen Klebeverfahren deutlich reduziert, da es an den Öffnungen des Klebespalts nicht zu einem Austreten überschüssigen Klebstoffs kommt. Das erfindungsgemäße Verfahren ermöglicht daher ein schnelles, sauberes und problemloses Verkleben zweier Körper.

Weitere bevorzugte und vorteilhafte Ausgestaltungsmerkmale des erfindungsgemäßen Verfahrens zur Herstellung einer Klebeverbindung sind Gegenstand der Unteransprüche 2 bis 10.

Eine bevorzugte Weiterbildung des erfindungsgemäßen Verfahrens zeichnet sich dadurch aus, dass zum Zweck der Ausbildung des Klebespalts zwischen dem ersten und dem zweiten Körper im Schritt a) Abstandshalter zwischen den einander zugewandten Flächen der beiden Körper positioniert und die Körper relativ zueinander fixiert werden.

Durch das Vorsehen von Abstandshaltern zwischen den beiden Körpern wird ein definierter Klebespalt geschaffen, in den das Klebstofffluid optimal einfließen kann.

Besonders vorteilhaft ist es, wenn die gasdurchlässige Abdichtung von einer Membran gebildet ist, wozu sich insbesondere mikroporöses Membranmaterial, beispielsweise in Form einer Membranfolie, eignet. Vorzugsweise wird ein Flächenmaterial verwendet, das eine Membran und ein darauf angeordnetes Absauggewebe als Gasführungselement aufweist.

Bei kleineren zu klebenden Strukturen kann es vorteilhaft sein, wenn die gasdichte Umhüllung den ersten Körper und den zweiten Körper vollständig umgibt. Dazu werden die beiden Körper beispielsweise in einen gasdicht verschlossenen Vakuumsack eingelegt, der mit dem Unterdruckanschluss versehen ist.

Die Einleitung des Klebstofffluids in den Klebespalt, die grundsätzlich ausschließlich durch die Saugwirkung des Unterdrucks im Klebstoffspalt erfolgen kann, kann durch eine druckbeaufschlagte Injektion des Klebstofffluids in den Klebespalt durch die Zuführeinrichtung unterstützt werden, was insbesondere dann von Vorteil sein kann, wenn das Klebstofffluid eine hohe Viskosität aufweist und/oder der freie Querschnitt des Klebstoffspalts zumindest abschnittsweise eingeengt ist.

Besonders vorteilhaft ist es auch, wenn im Schritt e) der am Unterdruckanschluss anliegende Unterdruck reduziert wird, sobald der Klebespalt mit Klebstofffluid gefüllt ist. Hierdurch wird erreicht, dass nachdem der Klebstoff vollständig in den Klebespalt eingetreten ist, zwar noch Luftblasen aus dem im Klebespalt befindlichen Klebstoff herausgesaugt werden können, nicht aber durch zu hohen Unterdruck Mikroporen im Klebstoff entstehen, die eine Reduzierung der Festigkeit der Klebeverbindung nach dem Aushärten bewirken könnten. Dies ist insbesondere dann vorteilhaft, wenn der Klebstoff eine hohe Viskosität aufweist, da in diesem Fall das Risiko gegeben ist, dass sich durch zu hohen Unterdruck Mikroporen im Klebstoff einstellen.

Besonders vorteilhaft lässt sich das erfindungsgemäße Verfahren durchführen, wenn auf der vom Klebespalt abgewandten Seite der jeweiligen gasdurchlässigen Abdeckung ein mit dem Unterdruckanschluss verbundenes Gasführungselement mit einer Gasführungsstruktur in unmittelbarer Nachbarschaft zur von der Klebstoffseite abgewandten Oberfläche der gasdurchlässigen Abdeckung vorgesehen ist. Diese Gasführungsstruktur ermöglicht eine zuverlässige Abführung der aus dem Klebespalt austretenden Gase, ohne dass die Poren der gasdurchlässigen Abdeckung etwa durch Bereiche der kollabierten gasdichten Umhüllung verschlossen werden.

Eine besonders geeignete Ausführungsform des erfindungsgemäßen Verfahrens lässt sich dann anwenden, wenn der erste Körper mit einer Montageausnehmung versehen ist und der zweite Körper einen in die Montageausnehmung einsetzbaren Montageabschnitt aufweist, wobei der Klebespalt in der Montageausnehmung zwischen dem ersten Körper und dem zweiten Körper gebildet ist. Dabei werden die folgenden Schritte durchgeführt:
a) Anschließen der Zuführeinrichtung für das Klebstofffluid an den ersten Körper derart, dass zumindest eine Austrittsöffnung der Zuführeinrichtung in das Innere der Montageausnehmung mündet;
b) Positionieren des Montageabschnitts des zweiten Körpers in der Montageausnehmung des ersten Körpers;
c) Anbringen der gasdurchlässigen Abdeckung im Bereich der jeweiligen der verbleibenden Öffnungen der Montageausnehmung derart, dass die Öffnungen von der jeweils zugeordneten gasdurchlässigen Abdeckung bedeckt sind;
d) Anbringen der mit einem Unterdruckanschluss versehenen gasdichten Umhüllung zumindest im Bereich der jeweiligen gasdurchlässigen Abdeckung, derart, dass sich die mit der jeweiligen gasdurchlässigen Abdeckung versehenen Öffnungen der Montageausnehmung im Inneren der gasdichten Umhüllung befinden;
e) Zuführen des Klebstofffluids durch die Zuführeinrichtung in die Montageausnehmung und Anlegen eines Unterdrucks an den Unterdruckanschluss der gasdichten Umhüllung.

Durch das Vorsehen des Klebespalts in der Montageausnehmung wird ein klar definierter Kanal geschaffen, in welchem das Klebstofffluid zur Füllung des Klebespalts entlang fließen kann.

Eine alternative vorteilhafte Anwendung des Verfahrens lässt sich dann durchführen, wenn ein Verbindungselement zur Verbindung der beiden Körper vorgesehen ist, das mit einer ersten und zumindest mit einer zweiten Montageausnehmung versehen ist, wobei der erste Körper und der zweite Körper jeweils einen in eine der Montageausnehmungen einsetzbaren Montageabschnitt aufweisen und wobei jeweils ein Klebespalt in der Montageausnehmung zwischen dem Verbindungselement und dem ersten Körper sowie zwischen dem Verbindungselement und dem zweiten Körper gebildet ist. Diese Ausgestaltung des Verfahrens umfasst die folgenden Schritte:
a) Anschließen zumindest einer Zuführeinrichtung für das Klebstofffluid an das Verbindungselement derart, dass zumindest eine Austrittsöffnung der Zuführeinrichtung(en) in das Innere der jeweiligen Montageausnehmung mündet;
b) Positionieren der Montageabschnitte des ersten und zweiten Körpers in der zugeordneten Montageausnehmung des Verbindungselements;
c) Anbringen gasdurchlässiger Abdeckungen im Bereich der jeweiligen der verbleibenden Öffnungen der Montageausnehmungen derart, dass die Öffnungen von der jeweils zugeordneten gasdurchlässigen Abdeckung bedeckt sind;
d) Anbringen der mit einem Unterdruckanschluss versehenen gasdichten Umhüllung zumindest im Bereich der jeweiligen gasdurchlässigen Abdeckung, derart, dass sich die mit der jeweiligen gasdurchlässigen Abdeckung versehenen Öffnungen der Montageausnehmungen im Inneren der gasdichten Umhüllung befinden;
e) Zuführen des Klebstofffluids durch die Zuführeinrichtung(en) in die Montageausnehmungen und Anlegen eines Unterdrucks an den Unterdruckanschluss der gasdichten Umhüllung.

Das Vorsehen des mit den Montageausnehmungen versehenen Verbindungselements sorgt für eine gegenüber einer flächigen Verklebung der beiden Körper miteinander verbesserte mechanische Festigkeit der Klebung, wobei auch hier die Montageausnehmungen einen geeigneten Kanal für das in den Klebespalt einströmende Klebstofffluid bilden.

Vorzugsweise werden bei diesen Ausführungsformen des Verfahrens die Abstandshalter vor der Durchführung des Schritts b) auf der Außenfläche des Montageabschnitts und/oder auf der Innenfläche der Montageausnehmung angebracht. Hierdurch wird erreicht, dass die Positionierung der Abstandshalter präzise an vorgesehenen Orten erfolgt, so dass die Abstandshalter das Einströmen des Klebstofffluids in den Klebespalt nicht oder nur unwesentlich behindern.

Vorteilhaft ist dabei, wenn die die beiden Körper umgebende gasdichte Umhüllung von einem kollabierbaren Unterdrucksack gebildet ist, der im kollabierten Zustand zumindest abschnittsweise an den beiden Körpern anliegt und dabei den Montageabschnitt beziehungsweise die Montageabschnitte in die Montageausnehmung(en) drückt. Hierdurch wird erreicht, dass die vom Umgebungsdruck auf den kollabierten Unterdrucksack einwirkenden Druckkräfte die beiden miteinander zu verbindenden Körper aneinander pressen.

Eine auf diese Weise hergestellte Klebeverbindung zwischen einem ersten Körper und einem zweiten Körper besitzt eine reproduzierbar definierte Festigkeit, wie sie insbesondere in der Luftfahrttechnik erforderlich ist, wenn beispielsweise Leichtbauteile, wie Bauteile aus Kohlefaserverbundwerkstoffen (CFK), miteinander oder mit Metallbauteilen verklebt werden müssen. Grundsätzlich ist das erfinderische Verfahren aber für die Klebung jeglicher zu klebender Materialien geeignet.

Selbstverständlich ist das erfindungsgemäße Verfahren nicht auf den Einsatz in der Luftfahrttechnik beschränkt, sondern kann beispielsweise auch auf anderen technischen Gebieten, wie zum Beispiel dem Automobilbau, Anwendung finden.

Die Erfindung erstreckt sich auch auf eine Anordnung zur Durchführung des erfindungsgemäßen Verfahrens, welche die im Anspruch 11 angegebenen Merkmale aufweist, nämlich:
- einen ersten Körper, einem zweiten Körper und einem zwischen den Körpern gebildeten Klebespalt ;
- zumindest eine Zuführeinrichtung für ein Klebstofffluid, die so angeordnet ist, dass zumindest eine Austrittsöffnung der Zuführeinrichtung in den Klebespalt mündet;
- zumindest eine gasdurchlässigen Abdeckung, die derart angeordnet ist, dass sie die verbleibenden Öffnungen des Klebespalts derart verschließt, dass Gas, insbesondere Luft, austreten kann, das Klebstoffluid jedoch zurückgehalten wird;
- eine zumindest im Bereich der jeweiligen gasdurchlässigen Abdeckung vorgesehenen gasdichten Umhüllung, die die mit der jeweiligen gasdurchlässigen Abdeckung versehenen Öffnungen des Klebespalts umgibt und die einen mit einer Unterdruckquelle verbindbaren Unterdruckanschluss aufweist,
- wobei die Zuführeinrichtung für das Klebstofffluid aus der gasdichten Umhüllung herausgeführt und mit einer Klebstoffquelle verbindbar ist.

Vorzugsweise ist auf der von der Montageausnehmung abgewandten Seite der gasdurchlässigen Abdeckung zumindest ein Gasführungselement, vorzugsweise ein Absauggewebe, angeordnet, welches in Fluidverbindung mit dem Unterdruckanschluss steht.

Eine bevorzugte Ausgestaltung der Anordnung zur Durchführung des erfindungsgemäßen Verfahrens zeichnet sich dadurch aus, dass einer der beiden Körper eine Montageausnehmung aufweist, dass der andere Körper mit einem Montageabschnitt versehen ist, der in die Montageausnehmung einsetzbar ist, und dass der Klebespalt in der Montageausnehmung zwischen der Außenseite des Montageabschnitts und der Innenseite der Montageausnehmung gebildet ist.

Alternativ ist es auch vorteilhaft, wenn sich die Anordnung zur Durchführung des erfindungsgemäßen Verfahrens dadurch auszeichnet, dass ein Verbindungselement vorgesehen ist, welches eine erste und zumindest eine zweite Montageausnehmung aufweist, dass die beiden Körper jeweils einen Montageabschnitt aufweisen, der jeweils in eine der Montageausnehmungen einsetzbar ist, und dass der Klebespalt in der Montageausnehmung zwischen der Außenseite des Montageabschnitts und der Innenseite der Montageausnehmung gebildet ist.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine teilweise geschnittene perspektivische Darstellung einer ersten Anordnung gemäß der Erfindung zur Durchführung des erfindungsgemäßen Verfahrens;
- Fig. 2: einen Querschnitt durch die Anordnung aus Fig. 1;
- Fig. 3: eine Seitenansicht der Anordnung aus Fig. 1;
- Fig. 4: eine geschnittene Darstellung einer zweiten Anordnung gemäß der Erfindung zur Durchführung des erfindungsgemäßen Verfahrens; und
- Fig. 5: eine geschnittene Darstellung einer dritten Ausführungsform gemäß der Erfindung zur Durchführung des erfindungsgemäßen Verfahrens.

### DARSTELLUNG VON BEVORZUGTEN AUSFÜHRUNGSBEISPIELEN

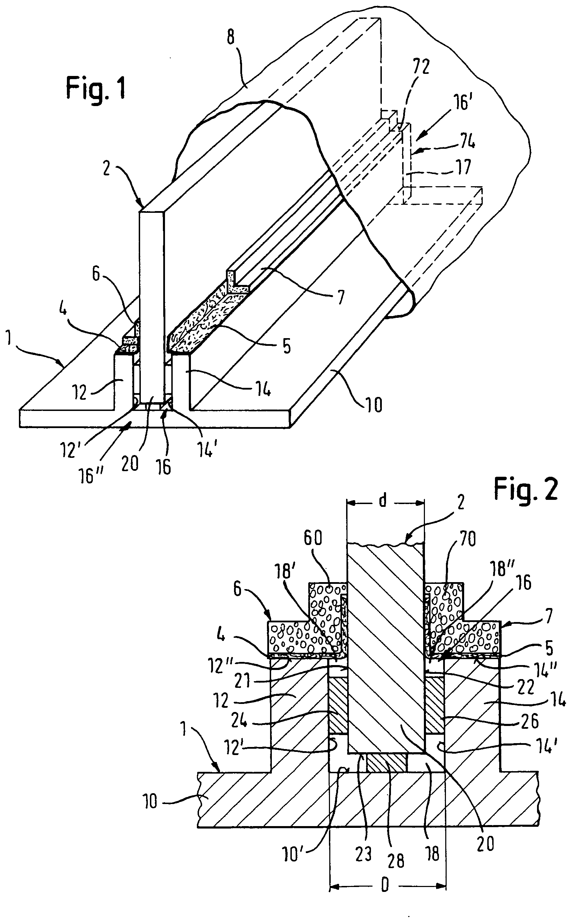

In Fig. 1 ist beispielhaft eine erste Anordnung zur Durchführung des erfindungsgemäßen Verfahrens dargestellt, an welcher nachfolgend das Verfahren der Erfindung näher beschrieben werden wird.

Zwei Körper 1, 2 sind miteinander zu kleben. Beispielsweise sind diese beiden Körper Bauteile einer Flugzeugstruktur, die zum Beispiel aus einem Leichtbauwerkstoff, wie Kohlefaserverbundwerkstoff (CFK), hergestellt sind. Nach erfolgter Klebung bilden diese beiden Körper 1, 2 gemeinsam ein Strukturelement des Flugzeugs. Die Erfindung ist jedoch nicht auf den Flugzeugbau beschränkt, sondern erstreckt sich auf alle Gebiete der Mechanik, in welchen zwei Bauteile miteinander geklebt werden müssen.

Der erste Körper 1 weist die Form eines umgedrehten π auf und wird auch als sogenannte π-Sektion bezeichnet. Dazu ist der erste Körper 1 mit einer unteren ebenen Platte 10 versehen, auf deren Oberseite zwei parallel zueinander verlaufende und rechtwinklig aus der unteren ebenen Platte 10 hervorstehende Rippen 12, 14 vorgesehen sind. Die Rippen 12, 14 bestimmen zwischen sich eine nutartige Montageausnehmung 16 zur Anbringung des zweiten Körpers 2.

Der zweite Körper 2 weist einen Montageabschnitt 20 auf, der in die Montageausnehmung 16 einsetzbar ist. Dabei ist die Dicke d des Montageabschnitts 20 kleiner als der Abstand D zwischen den beiden einander zugewandten Innenseiten 12', 14' der beiden Rippen 12, 14. Der Abstand D bestimmt somit die lichte Weite der nutartigen Montageausnehmung 16.

Im Bereich des Montageabschnitts 20 sind an den voneinander abgewandten Außenseiten 21, 22 sowie an der diesen benachbarten Stirnseite 23 des zweiten Körpers 2 Abstandshalter 24, 26, 28 angebracht, die den in die Montageausnehmung 16 des ersten Körpers 1 eingesetzten Montageabschnitt 20 des zweiten Körpers 2 positionieren und auf Abstand zu den Innenflächen 12', 14' sowie zur Basisfläche 10' der Montageausnehmung 16 halten. Der auf diese Weise entstehende freie Raum zwischen den Außenseiten 21, 22 und der Stirnseite 23 des Montageabschnitts 20 und den Innenseiten 12', 14' und der Basis 10' der Montageausnehmung 16 bildet einen Klebespalt 18, in den wie nachstehend noch beschrieben werden wird, ein Klebstoff eingefüllt wird, der die beiden Körper 1, 2 zwischen der Montageausnehmung 16 und dem Montageabschnitt 20 miteinander klebt.

Nachdem der mit den Abstandshaltern 24, 26, 28 versehene Montageabschnitt 20 in die Montageausnehmung 16 eingesetzt und darin positioniert worden ist, wird zunächst das eine Ende 16' der nutartig verlaufenden Montageausnehmung 16 verschlossen, indem beispielsweise ein Abdeckplatte 17 auf die Stirnseiten der Rippen 12, 14 und auf dem diesen benachbarten Stirnseitenabschnitt der unteren Platte 10 angebracht wird.

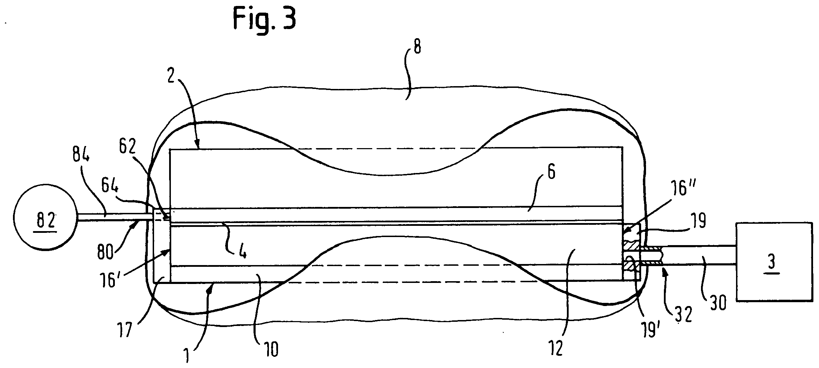

Am anderen Ende 16" der Montageausnehmung 16 wird ebenfalls eine Abdeckplatte 19 auf dieselbe Weise an den Stirnseiten der Rippen 12, 14 und dem diesen benachbarten Stirnseitenabschnitt der unteren Platte 10 angebracht. Diese in Fig. 3 gezeigte vordere Abdeckplatte 19 ist mit einer Zuführöffnung 19' versehen, die die Abdeckplatte 19 durchdringt und in dem Klebespalt 18 mündet. Eine Zuführeinrichtung 32 für den Klebstoff ist auf der Außenseite der Abdeckplatte 19 angebracht und steht in Fluidverbindung mit der Zuführöffnung 19'. Die Zuführeinrichtung 32 kann beispielsweise von einem Schlauch 30 gebildet sein, der mit einem Klebstoffvorratsbehälter 3 in Fluidverbindung steht.

Nach dem Anbringen der beiden Abdeckplatten 17, 19 öffnet sich der Klebespalt 18 lediglich noch im Bereich der jeweiligen oberen Stirnfläche 12", 14" der Rippen 12, 14 zwischen diesen und dem zweiten Körper 2. Es wird dann eine gasdurchlässige Abdeckung 4, 5 auf der oberen Stirnseite 12" und auf der oberen Stirnseite 14" der jeweiligen Rippe 12, 14 und an der jeweils benachbarten Außenseite des zweiten Körpers 2 derart angebracht, dass die in diesem Bereich gebildete Öffnung 18' beziehungsweise 18" des Klebespalts 18 von der gasdurchlässigen Abdeckung verschlossen wird. Als gasdurchlässigen Abdeckung 4, 5 wird vorzugsweise eine mikroporöse Membranfolie verwendet, die luftdurchlässig ist, aber das bei der Klebung verwendete Klebstofffluid nicht durch die Membranfolie hindurchtreten lässt.

Auf der gasdurchlässigen Abdeckung 4, 5 wird dann in der in den Figuren dargestellten bevorzugten Ausführungsform des Verfahrens jeweils ein Gasführungselement 6, 7 angeordnet, das im Inneren jeweils eine Gasführungsstruktur 60, 70 aufweist, die in der Lage ist, das aus der gasdurchlässigen Abdeckung 4, 5 austretende Gas aufzunehmen und zu den Stirnseiten 62, 72 in der Nähe des ersten Endes 16' der Montageausnehmung 16 zu leiten. An diesen Stirnseiten 62, 72 des jeweiligen Gasführungselements 6, 7 ist eine jeweilige Gasabführvorrichtung 64, 74 vorgesehen, die in einen gemeinsamen Unterdruckanschluss 80 einer gasdichten Umhüllung 8 münden. Der Unterdruckanschluss 80 ist über eine Unterdruckleitung 84 mit einer Unterdruckquelle 82, beispielsweise einer Vakuumpumpe, verbunden, so dass eine Fluidverbindung zwischen der jeweiligen Gasführungsstruktur 60, 70 und der Unterdruckquelle 82 gebildet ist. Statt der Gasführungselemente 6, 7 kann auch ein auf die Membran aufgebrachtes flächiges gasdurchlässiges Trägermaterial vorgesehen sein, das Gas zur jeweiligen Gasabführvorrichtung 64, 74 leiten kann.

Die vorstehend beschriebene Anordnung aus dem ersten Körper 1 und dem zweiten Körper 2 sowie den daran angebrachten gasdurchlässigen Abdeckungen 4, 5 und den jeweiligen Gasführungselementen 6, 7 wird anschließend in die gasdichte Umhüllung 8 eingebracht, die diese Anordnung gasdicht umschließt und beispielsweise von einem Vakuumsack gebildet ist. Lediglich der Unterdruckanschluss 80 mit der Unterdruckleitung 84 und die Zuführeinrichtung 32 mit dem Klebstoffzuführschlauch 30 sind abgedichtet durch die gasdichte Umhüllung 8 nach außen geführt.

Mit der auf diese Weise gemäß dem erfindungsgemäßen Verfahren vorbereiteten Anordnung aus erstem Körper 1 und zweitem Körper 2 wird anschließend der nachstehend beschriebene Klebevorgang gemäß dem erfindungsgemäßen Verfahren durchgeführt.

Mittels der Unterdruckquelle 82 wird ein Unterdruck an die Gasführungsstrukturen 60, 70 angelegt, wodurch die innerhalb der gasdichten Umhüllung 8 enthaltene Luft nach außen abgesaugt wird. Gleichzeitig entsteht im Klebespalt 18 ein Sog, der bewirkt, dass Klebstofffluid aus dem Klebstoffvorratsbehälter 3 durch den Klebstoffzuführschlauch 30 und die Zuführeinrichtung 32 in den Klebespalt 18 eintritt. Dadurch, dass die Zuführeinrichtung 32 für den Klebstoff und der Unterdruckanschluss 80 zum Absaugen der Luft auf zwei voneinander beabstandeten Stirnseiten der Montageausnehmung 16 gelegen sind, entsteht im Klebespalt nicht nur ein aufwärts zur gasdurchlässigen Abdeckung 4, 5 hin gerichteter Vertikalstrom, sondern auch eine in Längsrichtung der Montageausnehmung 16 gerichtete Längsströmung des Klebstofffluids. Auf diese Weise wird besonders zuverlässig und schnell der Klebespalt 18 mit Klebstofffluid gefüllt. Die jeweilige gasdurchlässige Abdeckung 4, 5 verhindert, dass das Klebstofffluid über die jeweilige obere Stirnseite 12", 14" der Rippen 12, 14 hinaus aus dem Klebespalt 18 austreten kann.

Da sich die von einem Vakuumsack gebildete gasdichte Umhüllung 8 nachdem im Wesentlichen alle Luft aus dem Vakuumsack herausgesaugt worden ist, an den ersten Körper 1 und den zweiten Körper 2 anlegt, werden diese beiden Körper von der elastischen gasdichten Umhüllung 8 aneinander gepresst, wodurch die miteinander geklebten Teile fixiert werden.

Nachdem der Klebstoff ausgehärtet ist und der erste und der zweite Körper 1, 2 wieder aus der gasdichten Umhüllung 8 herausgenommen worden sind, werden die beiden Gasführungselemente 6, 7 abgenommen und die gasdurchlässigen Abdeckungen 4, 5 werden entfernt. Anschließend können auch die beiden Abdeckplatten 17, 19 bei Bedarf entfernt werden und die Verklebung des ersten Körpers 1 mit dem zweiten Körper 2 ist erfolgreich abgeschlossen.

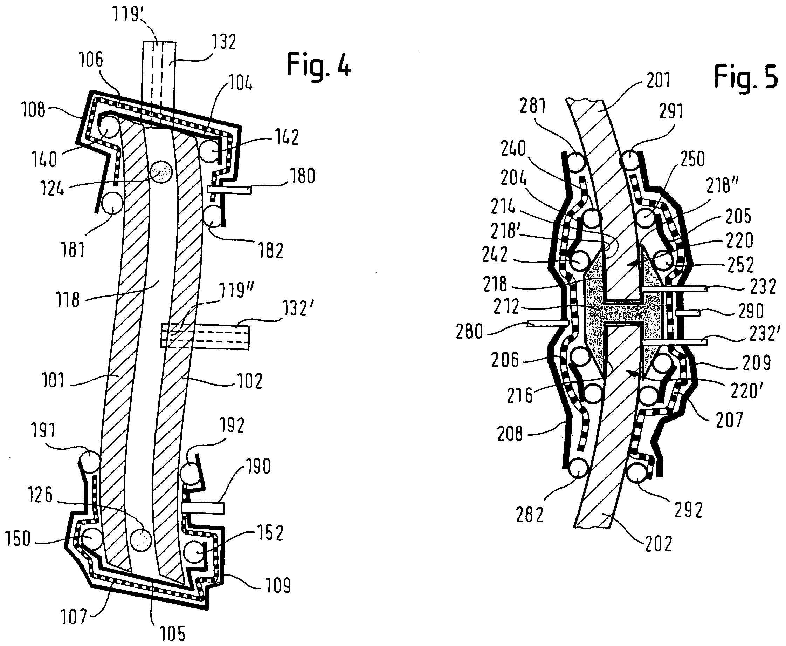

Fig. 4 zeigt eine zweite, alternative Anordnung zur Durchführung des erfindungsgemäßen Verfahrens. Bei dieser Anordnung sind die beiden miteinander zu klebenden Körper 101, 102 nicht mit Nut und Feder versehen, wie dies im Beispiel der Fig. 1 der Fall ist, sondern die beiden Körper 101, 102 sind mittels eines jeweiligen Flächenabschnitts aneinander zu kleben. Abstandshalter 124, 126 sorgen dafür, dass zwischen den beiden aneinander zu klebenden Flächenabschnitten der Körper 101, 102 ein Klebespalt 118 ausgebildet ist. Dieser Klebespalt 118 ist an seinen offenen Enden mit jeweils einer gasdurchlässigen Abdeckung 104, 105 verschlossen, die mittels zweier selbstklebender Dichtbandstreifen 140, 142 beziehungsweise 150, 152 am jeweils benachbarten Rand des Körpers 101, 102 abgedichtet befestigt ist.

Über der gasdurchlässigen Abdeckung 104, 105 ist jeweils ein von einem Absauggewebe gebildetes Gasführungselement 106, 107 angeordnet. Umschlossen wird der jeweilige mit der gasdurchlässigen Abdeckung 104, 105 versehene Randbereich der erfindungsgemäßen Anordnung mit einer gasdichten Umhüllung 108, 109, die von einer Vakuumfolie gebildet ist. Diese Vakuumfolie ist jeweils mittels zweier selbstklebender Dichtbandstreifen 181, 191 beziehungsweise 190, 192 am jeweiligen Körper 101, 102 abdichtend angeklebt. Die jeweilige gasdichte Umhüllung 108, 109 enthält einen Unterdruckanschluss 180 beziehungsweise 190, an den jeweils eine Unterdruckquelle anschließbar ist.

Die in Fig. 4 gezeigte Anordnung ist weiterhin mit zwei Zuführeinrichtungen 132, 132' für das Klebstofffluid versehen, die gemeinsam oder alternativ vorgesehen sein können. Die Zuführeinrichtung 132 durchdringt abgedichtet die gasdichte Umhüllung 108, das Gasführungselement 6 und die gasdurchlässige Abdeckung 104 und mündet mit seiner Zuführöffnung 119' in den Klebespalt 118. Die andere Zuführeinrichtung 132' durchdringt abgedichtet den zweiten Körper 102 und mündet mit ihrer Zuführöffnung 119" von der Seite in den Klebespalt 118.

Die in Fig. 5 dargestellte dritte Ausführungsform der erfindungsgemäßen Anordnung weist ein Verbindungselement 212 auf, welches eine erste Montageausnehmung 214 und eine zweite Montageausnehmung 216 besitzt. Die beiden miteinander zu verbindenden Körper 201, 202 sind gekrümmt ausgebildet und können beispielsweise jeweils von einer Rumpfhalbschale eines Luftfahrzeugs gebildet sein. Jeder dieser Körper 201, 202 ist mit einem Montageabschnitt 220, 220' in eine zugeordnete Montageausnehmung 214, 216 eingesetzt. Die Abdichtung erfolgt hier in ähnlicher Weise wie bei der in Fig. 1 und 2 dargestellten Ausführungsform, wobei im Beispiel der Fig. 5 die Montageausnehmung doppelt vorgesehen ist. Es wird daher nachstehend nur auf eine der beiden Montageausnehmungen Bezug genommen, da die andere entsprechend aufgebaut ist.

Wie im Beispiel der Fig. 1 und 2 ist die jeweilige Öffnung 218', 218" des Klebespalts 218 mittels jeweils einer gasdurchlässigen Abdeckung 204, 205 verschlossen, die mittels selbstklebendem Dichtband 240, 242 beziehungsweise 250, 252 abgedichtet am Körper 201 und am Verbindungselement 212 befestigt ist.

Jeweils ein Gasführungselement 206, 207 erstreckt sich auf der Innenseite beziehungsweise der Außenseite der Anordnung über das Verbindungselement sowie die diesem zugeordneten gasdurchlässigen Abdeckungen der Klebespalte in der oberen und in der unteren Montageausnehmung 214, 216. Schließlich ist über den Gasführungselementen 206, 207, die beispielsweise jeweils aus einem Absauggewebe gebildet sind, eine gasdichte Umhüllung 208, 209 vorgesehen, die mittels entsprechender selbstklebender Dichtbandstreifen 281, 282 beziehungsweise 291, 292 am ersten beziehungsweise am zweiten Körper 201, 202 abdichtend angeklebt sind.

Zwei Zuführeinrichtungen 232, 232' für das Klebstofffluid durchdringen von der Seite abdichtend die gasdichte Umhüllung 209, das Gasführungselement 207 und die Seitenwand des Verbindungselements 212 und münden in die erste Montageausnehmung 214 beziehungsweise in die zweite Montageausnehmung 216. Des Weiteren ist jeweils ein Unterdruckanschluss 280, 290 vorgesehen, der die zugeordnete gasdichte Umhüllung 208 beziehungsweise 209 abdichtend durchdringt und der jeweils an eine Unterdruckquelle angeschlossen ist.

Die Erfindung ist nicht auf die in den Figuren dargestellten flächigen beziehungsweise ebenen Körper beschränkt. Die Körper können selbstverständlich auch jede andere räumliche Gestalt annehmen, solange wie die Kontur und die Breite der miteinander zu klebenden Abschnitte aneinander angepasst sind, zum Beispiel die Kontur und die Breite des Montageabschnitts an die Kontur und die Breite der Montageausnehmung angepasst ist. Es können somit beispielsweise auch andere zwei- oder dreidimensionale gekrümmte oder gewölbte Körper mittels des erfindungsgemäßen Verfahrens miteinander verbunden werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Körper
- 2: Körper
- 3: Klebstoffvorratsbehälter
- 4: gasdurchlässige Abdeckung
- 5: gasdurchlässige Abdeckung
- 6: Gasführungselement
- 7: Gasführungselement
- 8: gasdichte Umhüllung
- 10: untere ebene Platte
- 10': Basisfläche
- 12: Rippe
- 12': Innenfläche
- 12": obere Stirnfläche
- 14: Rippe
- 14': Innenfläche
- 14": obere Stirnfläche
- 16: Montageausnehmung
- 16': Ende der Montageausnehmung
- 16": Ende der Montageausnehmung
- 17: Abdeckplatte
- 18: Klebespalt
- 18': Öffnung des Klebespalts
- 18": Öffnung des Klebespalts
- 19: Abdeckplatte
- 19': Zuführöffnung
- 20: Montageabschnitt
- 21: Außenseite
- 22: Außenseite
- 23: Stirnseite
- 24: Abstandshalter
- 26: Abstandshalter
- 28: Abstandshalter
- 30: Klebstoffzuführschlauch
- 32: Zuführeinrichtung
- 60: Gasführungsstruktur
- 62: Stirnseite
- 64: Gasabführvorrichtung
- 70: Gasführungsstruktur
- 72: Stirnseite
- 74: Gasabführvorrichtung
- 80: Unterdruckanschluss
- 82: Unterdruckquelle
- 84: Unterdruckleitung
- 101: Körper
- 102: Körper
- 104: gasdurchlässige Abdeckung
- 105: gasdurchlässige Abdeckung
- 106: Gasführungselement
- 107: Gasführungselement
- 108: gasdichte Umhüllung
- 109: gasdichte Umhüllung
- 118: Klebespalt
- 119': Zuführöffnung
- 119": Zuführöffnung
- 124: Abstandshalter
- 126: Abstandshalter
- 132: Zuführeinrichtung
- 132': Zuführeinrichtung
- 140: selbstklebender Dichtbandstreifen
- 142: selbstklebender Dichtbandstreifen
- 150: selbstklebender Dichtbandstreifen
- 152: selbstklebender Dichtbandstreifen
- 180: Unterdruckanschluss
- 181: selbstklebender Dichtbandstreifen
- 190: selbstklebender Dichtbandstreifen
- 191: selbstklebender Dichtbandstreifen
- 192: selbstklebender Dichtbandstreifen
- 201: Körper
- 202: Körper
- 204: gasdurchlässige Abdeckung
- 205: gasdurchlässige Abdeckung
- 206: Gasführungselement
- 207: Gasführungselement
- 208: gasdichte Umhüllung
- 209: gasdichte Umhüllung
- 212: Verbindungselement
- 214: Montageausnehmung
- 216: Montageausnehmung
- 218: Klebespalt
- 218': Öffnung des Klebespalts
- 218": Öffnung des Klebespalts
- 220: Montageabschnitt
- 220': Montageabschnitt
- 232: Zuführeinrichtung
- 232': Zuführeinrichtung
- 240: selbstklebendes Dichtband
- 242: selbstklebendes Dichtband
- 250: selbstklebendes Dichtband
- 252: selbstklebendes Dichtband
- 280: Unterdruckanschluss
- 281: selbstklebender Dichtbandstreifen
- 282: selbstklebender Dichtbandstreifen
- 290: Unterdruckanschluss
- 291: selbstklebender Dichtbandstreifen
- 292: selbstklebender Dichtbandstreifen

- d: Dicke des Montageabschnitts 20
- D: Abstand zwischen den beiden einander zugewandten Innenseite

## Patentansprüche

1. Verfahren zur Herstellung einer Klebeverbindung zwischen einem ersten Körper (1; 101; 201) und einem zweiten Körper (2; 102; 202) mit den Schritten:
a) Positionieren der beiden Körper (1, 2; 101, 102; 201, 202) derart, dass zwischen den Körpern (1, 2; 101, 102; 201, 202) ein Klebespalt (18; 118; 218', 218") gebildet wird;
b) Bereitstellen von zumindest einer Zuführeinrichtung (32; 132, 132'; 232, 232') für ein Klebstofffluid derart, dass zumindest eine Austrittsöffnung der Zuführeinrichtung (32; 132, 132'; 232, 232') in den Klebespalt (18; 118; 218', 218") mündet;
c) Anbringen einer gasdurchlässigen Abdeckung (4, 5; 104, 105; 204, 205) im Bereich der jeweiligen der verbleibenden Öffnungen des Klebespalts (18; 118; 218', 218") derart, dass die Öffnungen von der jeweils zugeordneten gasdurchlässigen Abdeckung (4, 5; 104, 105; 204, 205) bedeckt sind;
d) Anbringen einer mit einem Unterdruckanschluss (80; 180, 190; 280, 290) versehenen gasdichten Umhüllung (8; 108, 109; 208, 209) zumindest im Bereich der jeweiligen gasdurchlässigen Abdeckung (4, 5; 104, 105; 204, 205), derart, dass sich die mit der jeweiligen gasdurchlässigen Abdeckung (4, 5; 104, 105; 204, 205) versehenen Öffnungen des Klebespalts (18; 118; 218', 218") im Inneren der gasdichten Umhüllung (8; 108, 109; 208, 209) befinden; und
e) Zuführen eines Klebstofffluids durch die Zuführeinrichtung (32; 132, 132'; 232, 232') in den Klebstoffspalt (18; 118; 218', 218") und Anlegen eines Unterdrucks an den Unterdruckanschluss (80; 180, 190; 280, 290) der gasdichten Umhüllung (8; 108, 109; 208, 209).

2. Verfahren nach Anspruch 1,
**dadurch gekennzeichnet,**
**dass** zum Zweck der Ausbildung des Klebespalts (18; 118; 218', 218") zwischen dem ersten und dem zweiten Körper (1, 2; 101, 102; 201, 202) im Schritt a) Abstandshalter (24, 26, 28; 124, 126) zwischen den einander zugewandten Flächen der beiden Körper (1, 2; 101, 102; 201, 202) positioniert und die Körper (1, 2; 101, 102; 201, 202) relativ zueinander fixiert werden.

3. Verfahren nach einem der vorhergehenden Ansprüche,
**dadurch gekennzeichnet,**
**dass** die gasdurchlässige Abdeckung (4, 5; 104, 105; 204, 205) von einer gasdurchlässigen Membran gebildet ist.

4. Verfahren nach einem der vorhergehenden Ansprüche,
**dadurch gekennzeichnet,**
**dass** die gasdichte Umhüllung (8) den ersten Körper (1) und den zweiten Körper (2) umgibt.

5. Verfahren nach einem der vorhergehenden Ansprüche,
**dadurch gekennzeichnet,**
**dass** die Zuführung des Klebstofffluids in den Klebespalt (18; 118; 218', 218") im Schritt e) durch Injektion des Klebstofffluids unter Druck erfolgt.

6. Verfahren nach einem der vorhergehenden Ansprüche,
**dadurch gekennzeichnet,**
**dass** im Schritt e) der am Unterdruckanschluss (80; 180, 190; 280, 290) anliegende Unterdruck reduziert wird, sobald der Klebespalt (18; 118; 218', 218") mit Klebstofffluid gefüllt ist.

7. Verfahren nach einem der vorhergehenden Ansprüche,
**dadurch gekennzeichnet,**
**dass** auf der vom Klebespalt (18; 118; 218', 218") abgewandten Seite der jeweiligen gasdurchlässigen Abdeckung (4, 5; 104, 105; 204, 205) ein Gasführungselement (6, 7; 106, 107; 206, 207) mit einer Gasführungsstruktur (60, 70), vorzugsweise ein Absauggewebe, angeordnet ist, welches in Fluidverbindung mit dem Unterdruckanschluss (80; 180, 190; 280, 290) steht.

8. Verfahren nach einem der vorhergehenden Ansprüche,
wobei der erste Körper (1) mit einer Montageausnehmung (16) versehen ist;
wobei der zweite Körper (2) einen in die Montageausnehmung (16) einsetzbaren Montageabschnitt (20) aufweist und
wobei der Klebespalt (18) in der Montageausnehmung (16) zwischen dem ersten Körper (1) und dem zweiten Körper (2) gebildet ist, mit den Schritten:
a) Anschließen der Zuführeinrichtung (32) für das Klebstofffluid an den ersten Körper (1) derart, dass zumindest eine Austrittsöffnung der Zuführeinrichtung (32) in das Innere der Montageausnehmung (16) mündet;
b) Positionieren des Montageabschnitts (20) des zweiten Körpers (2) in der Montageausnehmung (16) des ersten Körpers (1);
c) Anbringen der gasdurchlässigen Abdeckung (4, 5) im Bereich der jeweiligen der verbleibenden Öffnungen der Montageausnehmung (16) derart, dass die Öffnungen von der jeweils zugeordneten gasdurchlässigen Abdeckung (4, 5) bedeckt sind;
d) Anbringen der mit einem Unterdruckanschluss (80) versehenen gasdichten Umhüllung (8) zumindest im Bereich der jeweiligen gasdurchlässigen Abdeckung (4, 5), derart, dass sich die mit der jeweiligen gasdurchlässigen Abdeckung (4, 5) versehenen Öffnungen der Montageausnehmung (16) im Inneren der gasdichten Umhüllung (8) befinden;
e) Zuführen des Klebstofffluids durch die Zuführeinrichtung (32) in die Montageausnehmung (16) und Anlegen eines Unterdrucks an den Unterdruckanschluss (80) der gasdichten Umhüllung (8).

9. Verfahren nach einem der Ansprüche 1 bis 7,
wobei ein Verbindungselement (212) zur Verbindung der beiden Körper (201, 202) vorgesehen ist, das mit einer ersten und zumindest einer zweiten Montageausnehmung (214, 216) versehen ist;
wobei der erste Körper (201) und der zweite Körper (202) jeweils einen in eine der Montageausnehmungen (214, 216) einsetzbaren Montageabschnitt (220, 220') aufweisen und
wobei jeweils ein Klebespalt (218, 218') in der Montageausnehmung zwischen dem Verbindungselement (212) und dem ersten Körper (201) sowie zwischen dem Verbindungselement (212) und dem zweiten Körper (202) gebildet ist, mit den Schritten:
a) Anschließen zumindest einer Zuführeinrichtung (232, 232') für das Klebstofffluid an das Verbindungselement (212) derart, dass zumindest eine Austrittsöffnung der Zuführeinrichtung(en) (232, 232') in das Innere der jeweiligen Montageausnehmung (214, 216) mündet;
b) Positionieren der Montageabschnitte (220, 220') des ersten und zweiten Körpers (201, 202) in der zugeordneten Montageausnehmung (214, 216) des Verbindungselements (212);
c) Anbringen gasdurchlässiger Abdeckungen (204, 205) im Bereich der jeweiligen der verbleibenden Öffnungen der Montageausnehmungen (214, 216) derart, dass die Öffnungen von der jeweils zugeordneten gasdurchlässigen Abdeckung (204, 205) bedeckt sind;
d) Anbringen der mit einem Unterdruckanschluss (280, 290) versehenen gasdichten Umhüllung (208, 209) zumindest im Bereich der jeweiligen gasdurchlässigen Abdeckung (204, 205), derart, dass sich die mit der jeweiligen gasdurchlässigen Abdeckung (204, 205) versehenen Öffnungen der Montageausnehmungen (214, 216) im Inneren der gasdichten Umhüllung (208, 209) befinden;
e) Zuführen des Klebstofffluids durch die Zuführeinrichtung(en) (232, 232') in die Montageausnehmungen (214, 216) und Anlegen eines Unterdrucks an den Unterdruckanschluss (280, 290) der gasdichten Umhüllung (208, 209).

10. Verfahren nach Anspruch 8 oder 9,
**dadurch gekennzeichnet,**
**dass** die gasdichte Umhüllung (8; 208, 209) die beiden Körper (1, 2; 201, 202) umgibt und von einem kollabierbaren Unterdrucksack gebildet ist, der im kollabierten Zustand zumindest abschnittsweise an den beiden Körpern (1, 2; 201, 202) anliegt und dabei den Montageabschnitt beziehungsweise die Montageabschnitte in die Montageausnehmung(en) drückt.

11. Anordnung zur Durchführung eines Verfahrens nach einem der Ansprüche 1 bis 10, mit
- einem ersten Körper (1; 101; 201), einem zweiten Körper (2; 102; 202) und einem zwischen den Körpern (1, 2; 101, 102; 201, 202) gebildeten Klebespalt (18; 118; 218', 218");
- zumindest einer Zuführeinrichtung (32; 132, 132'; 232, 232') für ein Klebstofffluid, die so angeordnet ist, dass zumindest eine Austrittsöffnung der Zuführeinrichtung (32; 132, 132'; 232, 232') in den Klebespalt (18; 118; 218', 218") mündet;
- zumindest einer gasdurchlässigen Abdeckung (4, 5; 104, 105; 204, 205), die derart angeordnet ist, dass sie die verbleibenden Öffnungen des Klebespalts (18; 118; 218', 218") derart verschließt, dass Gas, insbesondere Luft, austreten kann, das Klebstoffluid jedoch zurückgehalten wird;
- einer zumindest im Bereich der jeweiligen gasdurchlässigen Abdeckung (4, 5; 104, 105; 204, 205) vorgesehenen gasdichten Umhüllung (8; 108, 109; 208, 209), die die mit der jeweiligen gasdurchlässigen Abdeckung (4, 5; 104, 105; 204, 205) versehenen Öffnungen des Klebespalts (18; 118; 218', 218") umgibt und die einen mit einer Unterdruckquelle (82) verbindbaren Unterdruckanschluss (80; 180, 190; 280, 290) aufweist,
- wobei die Zuführeinrichtung (32; 132, 132'; 232, 232') für das Klebstofffluid aus der gasdichten Umhüllung (8; 108, 109; 208, 209) herausgeführt und mit einer Klebstoffquelle (3) verbindbar ist.

12. Anordnung nach Anspruch 11,
**dadurch gekennzeichnet,**
**dass** auf der vom Klebespalt (18; 118; 218', 218") abgewandten Seite der gasdurchlässigen Abdeckung (4, 5; 104, 105; 204, 205) zumindest ein Gasführungselement (6, 7; 106, 107; 206, 207), vorzugsweise ein Absauggewebe, angeordnet ist, welches in Fluidverbindung mit dem Unterdruckanschluss (80; 180, 190; 280, 290) steht.

13. Anordnung nach Anspruch 11 oder 12,
**dadurch gekennzeichnet,**
- **dass** einer der beiden Körper (1) eine Montageausnehmung (16) aufweist,
- **dass** der andere Körper (2) mit einem Montageabschnitt (20) versehen ist, der in die Montageausnehmung (16) einsetzbar ist, und
- **dass** der Klebespalt (18) in der Montageausnehmung (16) zwischen der Außenseite des Montageabschnitts (20) und der Innenseite der Montageausnehmung (16) gebildet ist.

14. Anordnung nach Anspruch 11 oder 12,
**dadurch gekennzeichnet,**
- **dass** ein Verbindungselement (212) vorgesehen ist, welches eine erste und zumindest eine zweite Montageausnehmung (214, 215) aufweist,
- **dass** die beiden Körper (201, 202) jeweils einen Montageabschnitt (220, 220') aufweisen, der jeweils in eine der Montageausnehmungen (214, 216) einsetzbar ist, und
- **dass** der Klebespalt (218, 218') in der Montageausnehmung (214, 216) zwischen der Außenseite des Montageabschnitts (220, 220') und der Innenseite der Montageausnehmung (214, 216) gebildet ist.

## Claims

1. Method for producing an adhesive bond between a first body (1; 101; 201) and a second body (2; 102; 202) comprising the steps:
a) positioning of the two bodies (1, 2; 101, 102; 201, 202) in such a way that an adhesive gap (18; 118; 218', 218") is formed between the bodies (1, 2; 101, 102; 201, 202);
b) providing of at least one feed device (32; 132, 132'; 232, 232') for an adhesive fluid in such a way that at least one outlet opening of the feed device (32; 132, 132'; 232, 232') opens into the adhesive gap (18; 118; 218', 218");
c) attaching of a gas-permeable covering (4, 5; 104, 105; 204, 205) in the region of the respective one of the remaining openings of the adhesive gap (18; 118; 218', 218") in such a way that the openings are covered by the respectively associated gas-permeable covering (4, 5; 104, 105; 204, 205);
d) attaching of a gas-tight sheath (8; 108, 109; 208, 209), which is provided with a vacuum connector (80; 180, 190; 280, 290), at least in the region of the respective gas-permeable covering (4, 5; 104, 105; 204, 205) in such a way that the openings of the adhesive gap (18; 118; 218', 218") which are provided with the respective gas-permeable covering (4, 5; 104, 105; 204, 205) are situated in the interior of the gas-tight sheath (8; 108, 109; 208, 209); and
e) feeding of an adhesive fluid by way of the feeding device (32; 132, 132'; 232, 232') into the adhesive gap (18; 118; 218', 218"), and applying of a vacuum to the vacuum connector (80; 180, 190; 280, 290) of the gas-tight sheath (8; 108, 109; 208, 209).

2. Method according to Claim 1,
**characterized**
**in that**, for the purpose of the configuration of the adhesive gap (18; 118; 218', 218") between the first and the second body (1, 2; 101, 102; 201, 202) in step a), spacer elements (24, 26, 28; 124, 126) are positioned between those faces of the two bodies (1, 2; 101, 102; 201, 202) which face one another, and the bodies (1, 2; 101, 102; 201, 202) are fixed relative to one another.

3. Method according to either of the preceding claims,
**characterized**
**in that** the gas-permeable covering (4, 5; 104, 105; 204, 205) is formed by a gas-permeable diaphragm.

4. Method according to one of the preceding claims,
**characterized**
**in that** the gas-tight sheath (8) surrounds the first body (1) and the second body (2).

5. Method according to one of the preceding claims,
**characterized**
**in that** the feeding of the adhesive fluid into the adhesive gap (18; 118; 218', 218") in step e) takes place by way of injection of the adhesive fluid under pressure.

6. Method according to one of the preceding claims,
**characterized**
**in that**, in step e), the vacuum which prevails at the vacuum connector (80; 180, 190; 280, 290) is reduced as soon as the adhesive gap (18; 118; 218', 218") is filled with adhesive fluid.

7. Method according to one of the preceding claims,
**characterized**
**in that** a gas guiding element (6, 7; 106, 107; 206, 207) with a gas guiding structure (60, 70), preferably a suction fabric, is arranged on that side of the respective gas-permeable covering (4, 5; 104, 105; 204, 205) which faces away from the adhesive gap (18; 118; 218', 218"), which gas guiding element (6, 7; 106, 107; 206, 207) is fluidically connected to the vacuum connector (80; 180, 190; 280, 290).

8. Method according to one of the preceding claims, the first body (1) being provided with a mounting recess (16);
the second body (2) having a mounting section (20) which can be inserted into the mounting recess (16), and
the adhesive gap (18) being formed in the mounting recess (16) between the first body (1) and the second body (2), comprising the steps:
a) connecting of the feeding device (32) for the adhesive fluid to the first body (1) in such a way that at least one outlet opening of the feeding device (32) opens into the interior of the mounting recess (16);
b) positioning of the mounting section (20) of the second body (2) in the mounting recess (16) of the first body (1);
c) attaching of the gas-permeable covering (4, 5) in the region of the respective ones of the remaining openings of the mounting recess (16) in such a way that the openings are covered by the respectively associated gas-permeable covering (4, 5);
d) attaching of the gas-tight sheath (8), which is provided with a vacuum connector (80), at least in the region of the respective gas-permeable covering (4, 5) in such a way that the openings of the mounting recess (16) which are provided with the respective gas-permeable covering (4, 5) are situated in the interior of the gas-tight sheath (8) ;
e) feeding of the adhesive fluid by way of the feeding device (32) into the mounting recess (16), and applying of a vacuum to the vacuum connector (80) of the gas-tight sheath (8).

9. Method according to one of Claims 1 to 7,
a connecting element (212) for connecting the two bodies (201, 202) being provided, which connecting element (212) is provided with a first and at least a second mounting recess (214, 216);
the first body (201) and the second body (202) in each case having a mounting section (220, 220') which can be inserted into one of the mounting recesses (214, 216), and
in each case one adhesive gap (218, 218') being formed in the mounting recess between the connecting element (212) and the first body (201) and between the connecting element (212) and the second body (202), comprising the steps:
a) connecting of at least one feeding device (232, 232') for the adhesive fluid to the connecting element (212) in such a way that at least one outlet opening of the feeding device/devices (232, 232') opens into the interior of the respective mounting recess (214, 216);
b) positioning of the mounting sections (220, 220') of the first and second body (201, 202) in the associated mounting recess (214, 216) of the connecting element (212);
c) attaching of gas-permeable coverings (204, 205) in the region of the respective ones of the remaining openings of the mounting recesses (214, 216) in such a way that the openings are covered by the respectively associated gas-permeable covering (204, 205);
d) attaching of the gas-tight sheath (208, 209), which is provided with a vacuum connector (280, 290), at least in the region of the respective gas-permeable covering (204, 205) in such a way that those openings of the mounting recesses (214, 216) which are provided with the respective gas-permeable covering (204, 205) are situated in the interior of the gas-tight sheath (208, 209);
e) feeding of the adhesive fluid by way of the feeding device/devices (232, 232') into the mounting recesses (214, 216), and applying of a vacuum to the vacuum connector (280, 290) of the gas-tight sheath (208, 209).

10. Method according to Claim 8 or 9,
**characterized**
**in that** the gas-tight sheath (8; 208, 209) surrounds the two bodies (1, 2; 201, 202) and is formed by a collapsible vacuum bag which, in the collapsed state, bears at least in sections against the two bodies (1, 2; 201, 202) and in the process presses the mounting section or the mounting sections into the mounting recess/recesses.

11. Arrangement for carrying out a method according to one of Claims 1 to 10, having
- a first body (1; 101; 201), a second body (2; 102; 202) and an adhesive gap (18; 118; 218', 218") which is formed between the bodies (1, 2; 101, 102; 201, 202);
- at least one feeding device (32; 132, 132'; 232, 232') for an adhesive fluid, which feeding device (32; 132, 132'; 232, 232') is arranged in such a way that at least one outlet opening of the feeding device (32; 132, 132'; 232, 232') opens into the adhesive gap (18; 118; 218', 218");
- at least one gas-permeable covering (4, 5; 104, 105; 204, 205) which is arranged in such a way that it closes the remaining openings of the adhesive gap (18; 118; 218', 218") in such a way that gas, in particular air, can escape, but the adhesive fluid is retained;
- a gas-tight sheath (8; 108, 109; 208, 209) which is provided at least in the region of the respective gas-permeable covering (4, 5; 104, 105; 204, 205), surrounds the openings of the adhesive gap (18; 118; 218', 218") which are provided with the respective gas-permeable covering (4, 5; 104, 105; 204, 205), and has a vacuum connector (80; 180, 190; 280, 290) which can be connected to a vacuum source (82),
- the feeding device (32; 132, 132'; 232, 232') for the adhesive fluid being guided out of the gas-tight sheath (8; 108, 109; 208, 209) and being capable of being connected to an adhesive source (3) .

12. Arrangement according to Claim 11,
**characterized**
**in that** at least one gas guiding element (6, 7; 106, 107; 206, 207), preferably a suction fabric, is arranged on that side of the gas-permeable covering (4, 5; 104, 105; 204, 205) which faces away from the adhesive gap (18; 118; 218', 218"), which gas guiding element (6, 7; 106, 107; 206, 207) is fluidically connected to the vacuum connector (80; 180, 190; 280, 290) .

13. Arrangement according to Claim 11 or 12,
**characterized**
- **in that** one of the two bodies (1) has a mounting recess (16),
- **in that** the other body (2) is provided with a mounting section (20) which can be inserted into the mounting recess (16), and
- **in that** the adhesive gap (18) is formed in the mounting recess (16) between the outer side of the mounting section (20) and the inner side of the mounting recess (16).

14. Arrangement according to Claim 11 or 12,
**characterized**
- **in that** a connecting element (212) is provided which has a first and at least a second mounting recess (214, 215),
- **in that** the two bodies (201, 202) in each case have a mounting section (220, 220') which can be inserted in each case into one of the mounting recesses (214, 216), and
- **in that** the adhesive gap (218, 218') is formed in the mounting recess (214, 216) between the outer side of the mounting section (220, 220') and the inner side of the mounting recess (214, 216).

## Revendications

1. Procédé destiné à établir une liaison adhésive entre un premier corps (1 ; 101 ; 201) et un deuxième corps (2 ; 102 ; 202) comportant les étapes consistant à :
a) positionner les deux corps (1, 2 ; 101, 102 ; 201, 202) de telle sorte qu'il se forme entre les corps (1, 2 ; 101, 102 ; 201, 202) un interstice d'agent adhésif (18 ; 118 ; 218', 218") ;
b) mettre à disposition au moins un système d'alimentation (32 ; 132, 132' ; 232, 232') pour un agent adhésif fluide, de telle sorte qu'au moins un orifice de sortie du système d'alimentation (32 ; 132, 132' ; 232, 232') débouche dans l'interstice d'agent adhésif (18 ; 118 ; 218', 218") ;
c) monter un recouvrement perméable au gaz (4, 5 ; 104, 105 ; 204, 205) dans la zone des orifices respectifs restants de l'interstice d'agent adhésif (18 ; 118 ; 218', 218"), de telle sorte que les orifices soient recouverts par le recouvrement perméable au gaz (4, 5 ; 104, 105 ; 204, 205) respectivement associé;
d) monter une enveloppe étanche au gaz (8 ; 108, 109 ; 208, 209) munie d'un raccord de dépression (80 ; 180, 190 ; 280, 290) au moins dans la zone du recouvrement perméable au gaz (4, 5 ; 104, 105 ; 204, 205) respectif, de telle sorte que les orifices de l'interstice d'agent adhésif (18 ; 118 ; 218', 218") munis du recouvrement perméable au gaz (4, 5 ; 104, 105 ; 204, 205) respectif se trouvent à l'intérieur de l'enveloppe étanche au gaz (8 ; 108, 109 ; 208, 209) ; et
e) alimenter un agent adhésif fluide via le système d'alimentation (32 ; 132, 132' ; 232, 232') dans l'interstice d'agent adhésif (18 ; 118 ; 218', 218") et appliquer une dépression sur le raccord de dépression (80 ; 180, 190 ; 280, 290) de l'enveloppe étanche au gaz (8 ; 108, 109 ; 208, 209).

2. Procédé selon la revendication 1, **caractérisé en ce qu'**aux fins de la création de l'interstice d'agent adhésif (18 ; 118 ; 218', 218") entre le premier et le deuxième corps (1, 2 ; 101, 102 ; 201, 202), au cours de l'étape a), des espaceurs (24, 26, 28 ; 124, 126) sont positionnés entre les surfaces qui se font face des deux corps (1, 2 ; 101, 102 ; 201, 202) et les corps (1, 2 ; 101, 102 ; 201, 202) sont fixés l'un par rapport à l'autre.

3. Procédé selon l'une quelconque des revendications précédentes, **caractérisé en ce que** le recouvrement perméable au gaz (4, 5 ; 104, 105 ; 204, 205) est formé d'une membrane perméable au gaz.

4. Procédé selon l'une quelconque des revendications précédentes, **caractérisé en ce que** l'enveloppe étanche au gaz (8) entoure le premier corps (1) et le deuxième corps (2).

5. Procédé selon l'une quelconque des revendications précédentes, **caractérisé en ce que** l'alimentation de l'agent adhésif fluide dans l'interstice d'agent adhésif (18 ; 118 ; 218', 218") au cours de l'étape e) s'effectue par injection sous pression de l'agent adhésif fluide.

6. Procédé selon l'une quelconque des revendications précédentes, **caractérisé en ce qu'**au cours de l'étape e), la dépression appliquée sur le raccord de dépression (80 ; 180, 190 ; 280, 290) est réduite dès que l'interstice d'agent adhésif (18 ; 118 ; 218', 218") est rempli d'agent adhésif fluide.

7. Procédé selon l'une quelconque des revendications précédentes, **caractérisé en ce que** sur la face du recouvrement perméable au gaz (4, 5 ; 104, 105 ; 204, 205) respectif qui est opposée à l'interstice d'agent adhésif (18 ; 118 ; 218', 218") est placé un élément conducteur de gaz (6, 7 ; 106, 107 ; 206, 207) pourvu d'une structure conductrice de gaz (60, 70), de préférence un tissu aspirant, lequel se trouve en liaison fluidique avec le raccord de dépression (80 ; 180, 190 ; 280, 290).

8. Procédé selon l'une quelconque des revendications précédentes, le premier corps (1) étant muni d'un évidement de montage (16) ;
le deuxième corps (2) comportant un segment de montage (20) insérable dans l'évidement de montage (16) et l'interstice d'agent adhésif (18) étant créé dans l'évidement de montage (16) entre le premier corps (1) et le deuxième corps (2), comportant les étapes consistant à :
a) raccorder le système d'alimentation (32) pour l'agent adhésif fluide sur le premier corps (1), de telle sorte qu'au moins un orifice de sortie du système d'alimentation (32) débouche à l'intérieur de l'évidement de montage (16) ;
b) positionner le segment de montage (20) du deuxième corps (2) dans l'évidement de montage (16) du premier corps (1) ;
c) monter le recouvrement perméable au gaz (4, 5) dans la zone des orifices respectifs restants de l'évidement de montage (16), de telle sorte que les orifices soient recouverts par le recouvrement perméable au gaz (4, 5) respectivement associé ;
d) monter l'enveloppe étanche au gaz (8) munie d'un raccord de dépression (80) au moins dans la zone du recouvrement perméable au gaz (4, 5) respectif, de telle sorte que les orifices de l'évidement de montage (16) munis du recouvrement perméable au gaz (4, 5) respectif se trouvent à l'intérieur de l'enveloppe étanche au gaz (8) ;
e) alimenter l'agent adhésif fluide via le système d'alimentation (32) dans l'évidement de montage (16) et appliquer une dépression sur le raccord de dépression (80) de l'enveloppe étanche au gaz (8).

9. Procédé selon l'une quelconque des revendications 1 à 7,
un élément d'assemblage (212) destiné à assembler les deux corps (201, 202) étant prévu, lequel est muni d'un premier et au moins d'un deuxième évidement de montage (214, 216) ;
le premier corps (201) et le deuxième corps (202) comportant respectivement un segment de montage (220, 220') insérable dans l'un des évidements de montage (214, 216) et chaque fois un interstice d'agent adhésif (218, 218') étant créé dans l'évidement de montage entre l'élément d'assemblage (212) et le premier corps (201), ainsi qu'entre l'élément d'assemblage (212) et le deuxième corps (202), comportant les étapes consistant à :
a) raccorder au moins un système d'alimentation (232, 232') pour l'agent adhésif fluide sur l'élément d'assemblage (212), de telle sorte qu'au moins un orifice de sortie du (des) système(s) d'alimentation (232, 232') débouche à l'intérieur de l'évidement de montage (214, 216) respectif ;
b) positionner les segments de montage (220, 220') des premier et deuxième corps (201, 202) dans l'évidement de montage (214, 216) associé de l'élément d'assemblage (212) ;
c) monter des recouvrements perméables au gaz (204, 205) dans la zone des orifices respectifs restants des évidements de montage (214, 216), de telle sorte que les orifices soient recouverts par le recouvrement perméable au gaz (204, 205) respectivement associé ;
d) monter l'enveloppe étanche au gaz (208, 209) munie d'un raccord de dépression (280, 290) au moins dans la zone du recouvrement perméable au gaz (204, 205) respectif, de telle sorte que les orifices des évidements de montage (214, 216) munis du recouvrement perméable au gaz (204, 205) respectif se trouvent à l'intérieur de l'enveloppe étanche au gaz (208, 209) ;
e) alimenter l'agent adhésif fluide via le(s) système(s) d'alimentation (232, 232') dans les évidements de montage (214, 216) et appliquer une dépression sur le raccord de dépression (280, 290) de l'enveloppe étanche au gaz (208, 209).

10. Procédé selon la revendication 8 ou 9, **caractérisé en ce que** l'enveloppe étanche au gaz (8 ; 208, 209) entoure les deux corps (1, 2 ; 201, 202) et est formée d'un sac à dépression affaissable, qui lorsqu'il est affaissé est placé au moins par segments contre les deux corps (1, 2 ; 201, 202) et presse ainsi le segment de montage, respectivement les segments de montage, dans l'évidement (les évidements) de montage.

11. Agencement, destiné à réaliser un procédé selon l'une quelconque des revendications 1 à 10, comprenant
- un premier corps (1 ; 101 ; 201), un deuxième corps (2 ; 102 ; 202) et un interstice d'agent adhésif (18 ; 118 ; 218', 218") formé entre les corps (1, 2 ; 101, 102 ; 201, 202) ;
- au moins un système d'alimentation (32 ; 132, 132' ; 232, 232') pour un agent adhésif fluide, qui est placé de telle sorte qu'au moins un orifice de sortie du système d'alimentation (32 ; 132, 132' ; 232, 232') débouche dans l'interstice d'agent adhésif (18 ; 118 ; 218', 218") ;
- au moins un recouvrement perméable au gaz (4, 5 ; 104, 105 ; 204, 205) qui est placé de sorte à fermer les orifices restants de l'interstice d'agent adhésif (18 ; 118 ; 218', 218") de telle sorte que du gaz, notamment de l'air, puisse s'échapper, que l'agent adhésif fluide reste pourtant retenu ;
- une enveloppe étanche au gaz (8 ; 108, 109 ; 208, 209), prévue au moins dans la zone du recouvrement perméable au gaz (4, 5 ; 104, 105 ; 204, 205) respectif, qui entoure les orifices de l'interstice d'agent adhésif (18 ; 118 ; 218', 218") munis du recouvrement perméable au gaz (4, 5 ; 104, 105 ; 204, 205) respectif et qui comporte un raccord de dépression (80 ; 180, 190 ; 280, 290) susceptible d'être relié sur une source de dépression (82),
- le système d'alimentation (32 ; 132, 132' ; 232, 232') pour l'agent adhésif fluide étant conduit hors de l'enveloppe étanche au gaz (8 ; 108, 109 ; 208, 209) et étant susceptible d'être relié avec une source d'agent adhésif (3).

12. Agencement selon la revendication 11, **caractérisé en ce que** sur la face du recouvrement perméable au gaz (4, 5 ; 104, 105 ; 204, 205) qui est opposée à l'interstice d'agent adhésif (18 ; 118 ; 218', 218") est placé au moins un élément conducteur de gaz (6, 7 ; 106, 107 ; 206, 207), de préférence un tissu aspirant, lequel se trouve en liaison fluidique avec le raccord de dépression (80 ; 180, 190 ; 280, 290).

13. Agencement selon la revendication 11 ou 12, **caractérisé**
- **en ce que** l'un des deux corps (1) comporte un évidement de montage (16),
- **en ce que** l'autre corps (2) est muni d'un segment de montage (20) qui est insérable dans l'évidement de montage (16) et
- **en ce que** l'interstice d'agent adhésif (18) est créé dans l'évidement de montage (16), entre la face extérieure du segment de montage (20) et la face intérieure de l'évidement de montage (16).

14. Agencement selon la revendication 11 ou 12, **caractérisé**
- **en ce qu'**il est prévu un élément d'assemblage (212), lequel comporte un premier et au moins un deuxième évidement de montage (214, 215),
- **en ce que** les deux corps (201, 202) comportent chacun un segment de montage (220, 220') qui est respectivement insérable dans l'un des évidements de montage (214, 216) et
- **en ce que** l'interstice d'agent adhésif (218, 218') est créé dans l'évidement de montage (214, 216), entre la face extérieure du segment de montage (220, 220') et la face intérieure de l'évidement de montage (214, 216) .
